(19) Europäisches Patentamt / European Patent Office / Office européen des brevets

(11) **EP 4 660 226 A1**

(12) **EUROPEAN PATENT APPLICATION**
published in accordance with Art. 153(4) EPC

(43) Date of publication:
**10.12.2025 Bulletin 2025/50**

(21) Application number: **24807315.7**

(22) Date of filing: **20.02.2024**

(51) International Patent Classification (IPC):
*C08J 9/28* (2006.01)     *C08J 9/36* (2006.01)
*B29C 48/08* (2019.01)     *B29C 48/00* (2019.01)
*B29C 55/12* (2006.01)     *C09D 7/61* (2018.01)
*C08K 3/013* (2018.01)     *H01M 50/446* (2021.01)

(52) Cooperative Patent Classification (CPC):
Y02E 60/10

(86) International application number:
**PCT/KR2024/002161**

(87) International publication number:
**WO 2024/237433 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **16.05.2023  KR 20230062827**

(71) Applicants:
• **W-Scope Korea Co., Ltd.**
  **Cheongju-si, Chungcheongbuk-do 28122 (KR)**
• **W-Scope Chungju Plant Co., Ltd.**
  **Daesowon-myeon**
  **Chungju-si, Chungcheongbuk-do**
  **27461 (KR)**

(72) Inventors:
• **JANG, Yun Hyeok**
  **Cheongju-si, Chungcheongbuk-do 28122 (KR)**
• **PARK, Dae Bog**
  **Cheongju-si, Chungcheongbuk-do 28122 (KR)**
• **KIM, Woo Jin**
  **Cheongju-si, Chungcheongbuk-do 28122 (KR)**
• **LEE, Min Woo**
  **Cheongju-si, Chungcheongbuk-do 28122 (KR)**
• **CHOI, Kwang Ho**
  **Cheongju-si, Chungcheongbuk-do 28122 (KR)**

(74) Representative: **BCKIP Part mbB**
**MK1**
**Landsbergerstraße 98, 3.Stock**
**80339 München (DE)**

(54) **METHOD FOR MANUFACTURING SEPARATOR, AND SEPARATOR MANUFACTURED THEREBY**

(57)    One aspect of the present invention provides a method for manufacturing a separator, comprising: (a) processing a composition comprising a polyolefin and a pore-forming agent to obtain a base sheet; (b) stretching the base sheet in a machine direction (MD) and a transverse direction (TD), and removing the pore-forming agent to obtain a porous film; and (c) stretching the porous film in the transverse direction (TD) and heat-setting the same, and also provides a separator manufactured using the method.

EP 4 660 226 A1

**Description**

**[Technical Field]**

The present invention relates to a method for manufacturing a separator and a separator manufactured by using the same.

**[Background Art]**

Lithium secondary batteries are widely used as power sources for various electronic devices that require miniaturization and weight reduction, such as smartphones, notebook computers, and tablet PCs. As their application range expands to include large- and medium-sized batteries for smart grids and electric vehicles, there is a growing demand for lithium secondary batteries with large capacity, long lifespan, and high stability.

Recently, in order to increase the capacity of lithium secondary batteries, thinning of the separator has emerged as a technical challenge. However, such thinning accompanies a reduction in mechanical strength, and thus it is necessary to achieve a balance between the two. To this end, separators using resins with a higher weight-average molecular weight than conventional polyethylene, such as ultrahigh molecular weight polyethylene, are being continuously developed. Ultrahigh molecular weight polyethylene (UHMWPE) generally refers to polyethylene having a weight-average molecular weight of 1,000,000 or more. According to Japanese Patent Publication No. 60-242035, UHMWPE is known to exhibit superior mechanical strength, abrasion resistance, uniformity, self-lubrication, and chemical resistance compared to general-purpose polyethylene such as high-density polyethylene and low-density polyethylene.

However, due to its high molecular weight, UHMWPE has poor processability because of its low fluidity even in a completely molten state. Moreover, there is a problem in that the heat shrinkage rate of the manufactured separator at high temperatures (150°C) increases, resulting in reduced heat resistance.

Meanwhile, in order to improve the heat resistance of the separator, so-called ceramic-coated separators, in which ceramic particles are coated on the surface of a porous support, have been proposed. However, such ceramic-coated separators present significant technical challenges related to air permeability. That is, when a heat-resistant layer containing ceramic particles is coated on the surface of the porous support, the heat resistance of the separator is improved. However, this heat-resistant layer closes the pores formed in the porous support, reducing air permeability of the separator and thereby decreasing the ion transfer pathway between the anode and cathode, which ultimately leads to a significant reduction in the charging and discharging performance of the battery.

There have also been attempts to form an additional adhesive layer on the surface of the porous support and/or the surface of the heat-resistant layer to improve the adhesion with the electrode and thereby extend the life of the battery.

Generally, a separator having functional layers such as a heat-resistant layer and an adhesive layer is manufactured by running the porous support at a constant speed and coating and drying a composition for forming the functional layer on one or both surfaces of the porous support. However, when the porous support includes or is made of UHMWPE, there is a problem in that the heat shrinkage rate of the porous support increases further due to the heat applied during the drying process for forming the functional layer.

**[Detailed Description of the Invention]**

**[Technical Problem]**

The present invention has been made in order to solve the problems of the related art as described above, and an object of the present invention is to provide a method for manufacturing a separator and a separator manufactured by the same, capable of achieving and improving a balanced combination of processability, heat resistance, and puncture strength.

**[Technical Solution]**

In one aspect, the present invention provides a method for manufacturing a separator, the method comprising: (a) processing a composition comprising a polyolefin and a pore-forming agent to obtain a base sheet; (b) stretching the base sheet in a machine direction (MD) and a transverse direction (TD), and removing the pore-forming agent to obtain a porous film; and (c) stretching the porous film in the transverse direction (TD) and heat-setting the same, wherein the method satisfies the following conditions (1) to (3):

$$(1)\ 7 \leq Mb \leq 8, \quad (2)\ 0 < Mb/Tb < 1, \quad (3)\ 0 < Mb/(Tb \times Tc) < 0.5,$$

wherein Mb and Tb are the stretch ratios of the base sheet in the machine direction (MD) and the transverse direction (TD), respectively, in step (b), and Tc is the stretch ratio of the porous film in the transverse direction (TD) in step (c).

In one embodiment, the weight-average molecular weight (Mw) of the polyolefin may be from 1,000,000 to 4,000,000.

In one embodiment, the polyolefin may include at least one selected from the group consisting of polyethylene, polypropylene, polybutylene, polymethylpentene, ethylene-vinyl acetate, ethylene-butyl acrylate, ethylene-ethyl acrylate, and copolymers or combinations of two or more thereof. In one embodiment, the Tc may be from 1.5 to 2.0.

In one embodiment, the ratio (Mb/Tc) of Mb to Tc may be from 3.0 to 5.0.

In one embodiment, the pore-forming agent may be paraffin oil having a kinematic viscosity of 50 to 100 cSt at 40°C.

In one embodiment, the base sheet obtained in step (a) may have a thickness of 1,000 to 1,500 $\mu$m, and the porous film obtained in step (c) may have a thickness of 10 $\mu$m or less and a puncture strength of 500 gf or more.

In one embodiment, after step (c), the method may further comprise: (d) forming a functional layer by coating and drying a coating solution containing a binder and a solvent on at least one surface of the porous film.

In one embodiment, the binder may be selected from the group consisting of: polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene copolymer, alkyl acrylate-acrylonitrile copolymer, polyethylene glycol, acrylic rubber, and combinations of two or more thereof.

In one embodiment, the solvent may be selected from the group consisting of: methanol, ethanol, propanol, butanol, methoxyethanol, ethoxyethanol, lactone, acetonitrile, N-methyl-2-pyrrolidone, formic acid, nitromethane, acetic acid, dimethyl sulfoxide, water, and combinations of two or more thereof.

In one embodiment, the coating solution may further include at least one inorganic particle selected from the group consisting of: $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof.

In another aspect, the present invention provides a separator manufactured using the above-described method for manufacturing a separator, wherein the separator satisfies the following conditions:

(i) A thermal shrinkage rate in the machine direction (MD) of 5% or less at 150°C, (ii) A thermal shrinkage rate in the transverse direction (TD) of 5% or less at 150°C, and (iii) A ratio of the thermal shrinkage rate in the transverse direction (TD) to that in the machine direction (MD) of 1.1 or less at 150°C.

**[Effect of the Invention]**

According to one aspect of the present invention, the method for manufacturing a separator includes: (a) processing a composition comprising a polyolefin and a pore-forming agent to obtain a base sheet; (b) stretching the base sheet in the machine direction (MD) and the transverse direction (TD), and removing the pore-forming agent to obtain a porous film; and (c) stretching the porous film in the transverse direction (TD) and performing heat-setting; wherein the method satisfies the following conditions (1) to (3): (1) $7 \leq Mb \leq 8$, (2) $0 < Mb/Tb < 1$, (3) $0 < Mb/(Tb \times Tc) < 0.5$.

By satisfying the above conditions, the method can achieve and improve a balance among processability, heat resistance, and puncture strength.

In the above (1) to (3), Mb and Tb are the stretching ratios of the base sheet in the machine direction (MD) and the transverse direction (TD), respectively, in step (b), and Tc is the stretching ratio of the porous film in the transverse direction (TD) in step (c).

The effects of the present invention are not limited to those described above and should be understood to include all effects that can be derived from the constitution of the invention described in the detailed description or the claims.

**[Modes of the Invention]**

Hereinafter, the present invention will be described in detail. However, it is to be understood that the invention may be embodied in various other forms and should not be construed as limited to the embodiments described herein.

Throughout the specification, when a part is said to be "connected" to another part, it includes both a direct connection and an indirect connection via another member in between. Also, when a part "includes" a component, it is to be understood that the part may further include other components unless otherwise stated to exclude them.

One aspect of the present invention provides a method for manufacturing a separator comprising:

(a) processing a composition comprising a polyolefin and a pore-forming agent to obtain a base sheet; (b) stretching the base sheet in the machine direction (MD) and the transverse direction (TD), and removing the pore-forming agent to obtain a porous film; and (c) stretching the porous film in the transverse direction (TD) and heat-setting; wherein the method satisfies the following conditions (1) to (3):

$$(1)\ 7 \le \text{Mb} \le 8, \quad (2)\ 0 < \text{Mb/Tb} < 1, \quad (3)\ 0 < \text{Mb/(Tb} \times \text{Tc)} < 0.5,$$

In the above (1) to (3), Mb and Tb are the stretching ratios of the base sheet in the machine direction (MD) and the transverse direction (TD), respectively, in step (b), and Tc is the stretching ratio of the porous film in the transverse direction (TD) in step (c).

In step (a), the composition comprising a polyolefin and a pore-forming agent may be extruded and discharged through a T-die to obtain a base sheet. The weight-average molecular weight (Mw) of the polyolefin may be 1,000,000 to 4,000,000, preferably 1,500,000 to 3,000,000, and more preferably 1,500,000 to 2,500,000. The molecular weight distribution (Mw/Mn) may be 3 to 7. If the weight-average molecular weight is less than 1,000,000, the mechanical strength of the separator may be deteriorated. If it exceeds 4,000,000, thermal shrinkage may excessively increase, deteriorating heat resistance. If the molecular weight distribution is less than 3, dispersion with the pore-forming agent may deteriorate, lowering the uniformity of the resulting separator. If it exceeds 7, mechanical properties may deteriorate. The terms "weight-average molecular weight" and "molecular weight distribution" as used herein refer to values measured by gel permeation chromatography (GPC) using polystyrene as a standard, according to methods described in the literature (e.g., Macromolecules, Vol. 34, No. 19, pp. 6812-6820 (2001)).

The polyolefin may be selected from the group consisting of polyethylene, polypropylene, polybutylene, polymethylpentene, ethylene-vinyl acetate, ethylene-butyl acrylate, ethylene-ethyl acrylate, and copolymers or combinations of two or more thereof. Preferably, it may include polyethylene and/or polypropylene, and more preferably, it may include polyethylene, but is not limited thereto.

The pore-forming agent may be selected from the group consisting of paraffin oil, paraffin wax, mineral oil, solid paraffin, soybean oil, rapeseed oil, palm oil, coconut oil, di(2-ethylhexyl) phthalate, dibutyl phthalate, diisononyl phthalate, diisodecyl phthalate, bis(2-propylheptyl) phthalate, naphthenic oil, and combinations of two or more thereof. Preferably, the pore-forming agent may be paraffin oil, and more preferably, paraffin oil having a kinematic viscosity of 50 to 100 cSt at 40°C. The composition may comprise 10 to 50 wt% of the polyolefin, preferably 20 to 40 wt%, and 50 to 90 wt% of the pore-forming agent, preferably 60 to 80 wt%. The base sheet obtained in step (a) may have a thickness of 1,000 to 1,500 $\mu$m, preferably 1,200 to 1,500 $\mu$m. If the composition includes ultrahigh molecular weight polyolefin, for example, UHMWPE having a weight-average molecular weight of 2,000,000 or more, it may be difficult to control the thickness of the base sheet to less than 1,000 $\mu$m through extrusion and casting. Also, if the base sheet has a thickness exceeding 1,500 $\mu$m, it may be difficult to thin the separator even by subsequent stretching processes.

In step (b), the base sheet may be stretched in the machine direction (MD) and the transverse direction (TD), and the pore-forming agent may be removed to obtain a porous film. The stretching may be performed by sequential biaxial stretching in which the base sheet is first stretched in the MD and then in the TD, or by simultaneous biaxial stretching in which it is stretched in both directions at the same time. The term "stretch ratio" as used herein refers to the ratio of the length of the base sheet after stretching to the original length in the MD or TD. It may also be referred to as draw ratio or stretch rate.

The stretching of the base sheet in the machine direction (MD) may be performed using a roll stretcher. The roll stretcher is a device that stretches the base sheet along the transport direction of the base sheet on the process line. The direction of stretching of the base sheet by the roll stretcher may be defined as the machine direction (MD). The roll stretcher may include a plurality of rolls arranged along the transport direction of the base sheet, and the rolls at the rear end may rotate faster than those at the front end to stretch the base sheet at a predetermined ratio in the MD.

The stretching of the base sheet in the transverse direction (TD) may be performed using a tenter stretcher. The tenter stretcher is a device that stretches the base sheet perpendicular to the transport direction of the base sheet. The TD edges of the base sheet may be fixed by clamps or clips and separated in the TD to stretch the base sheet at a predetermined ratio.

The pore-forming agent may be selectively extracted and removed from the base sheet using a predetermined extraction solvent. The base sheet may be immersed in a bath containing the extraction solvent for a predetermined time to remove the pore-forming agent.

The content of the residual pore-forming agent remaining on the surface and/or inside of the porous film after extraction may be 1 wt% or less. Examples of the extraction solvent include methyl ethyl ketone, hexane, dichloromethane, and the like, but are not limited thereto. The extraction time may depend on the thickness and porosity of the base sheet and/or the porous film, but if the thickness and porosity of the porous film are 1 to 10 $\mu$m and 30 to 70 vol%, respectively, the extraction may be completed within 10 minutes, preferably within 5 minutes.

Furthermore, the porous film from which the pore-forming agent has been removed may be heated to remove the residual extraction solvent. Some of the extraction solvent used in step (b) may remain on the surface and/or inside of the porous film. Since the residual solvent may deteriorate the physical properties of the separator in subsequent processes, the porous film may be heated to a temperature equal to or higher than the boiling point of the solvent to remove the residual solvent.

In step (c), the porous film may be stretched in the transverse direction (TD) and heat-set to obtain a separator.

The heat-setting refers to a process in which, after stretching the porous film in the transverse direction (TD), the porous film is relaxed and held in place while heat is applied to forcibly fix the film, thereby removing residual stress. A higher heat-setting temperature is advantageous for lowering the thermal shrinkage of the separator. However, if the temperature is excessively high, partial melting of the porous film may occur, thereby closing the formed pores and reducing gas permeability.

It is preferable that the heat-setting temperature be selected within a range in which 10 to 30 wt% of the crystalline portion of the porous film melts. If the heat-setting temperature is selected within this range, it is possible to prevent the problems of no residual stress removal effect due to insufficient rearrangement of the polyolefin molecules inside the porous film and pore closure due to partial melting. For example, the heat-setting temperature may be from 120 to 140°C, preferably from 123 to 135°C, and the heat-setting time may be from 5 seconds to 1 minute.

In relation to the stretching performed in steps (b) and (c), the method for manufacturing a separator may satisfy the following conditions (1) to (3):

$$(1)\ 7 \leq Mb \leq 8, \quad (2)\ 0 < Mb/Tb < 1, \quad (3)\ 0 < Mb/(Tb \times Tc) < 0.5,$$

In the above (1) to (3), Mb and Tb are the stretch ratios of the base sheet in the machine direction (MD) and the transverse direction (TD), respectively, in step (b), and Tc is the stretch ratio of the porous film in the transverse direction (TD) in step (c).

Condition (1) relates to the stretch ratio (Mb) of the base sheet in the MD during step (b). The Mb may be from 7 to 8, preferably from 7 to 7.5. If Mb is less than 7, structural properties required of the porous film, such as pore size, porosity, and gas permeability, may deteriorate. If Mb exceeds 8, the thermal shrinkage rate of the separator in the MD may increase, thereby lowering heat resistance. Particularly, adjusting Mb within a predetermined range may cause the base sheet to relatively or substantially shrink in the TD after being stretched in the MD. This shrinkage can reduce the residual stress accumulated to the base sheet and/or the porous film during the subsequent TD stretching, thereby lowering the thermal shrinkage of the separator and improving heat resistance. Moreover, if the heat resistance of the porous film is improved, its resistance to heat applied during the coating and drying process for forming a functional layer on its surface can also be enhanced, thereby preventing deformation and/or modification of the separator.

Condition (2) relates to the ratio of the MD stretch ratio (Mb) of the base sheet to the TD stretch ratio (Tb) of the base sheet in step (b). The ratio may be greater than 0 and less than 1, preferably from 0.5 to 0.95, more preferably from 0.7 to 0.9. Here, the Tb may be from 8.0 to 10.0, preferably from 8.5 to 9.5. Tb is the TD stretch ratio during the biaxial stretching in step (b). By controlling Tb to be smaller than Mb, it is possible to reduce the residual stress accumulated in the base sheet during TD stretching in biaxial stretching, which contributes to lowering thermal shrinkage and improving heat resistance. If Tb is less than 0.5, the structural properties required of the porous film, such as pore size, porosity, pore alignment, and gas permeability, may deteriorate.

Condition (3) relates to the ratio of the MD stretch ratio (Mb) of the base sheet in step (b) to the total TD stretch ratio (Tb × Tc) throughout the entire process for manufacturing the separator. The ratio may be greater than 0 and less than 0.5, preferably 0.3 or more, more preferably 0.4 or more. Here, Tc may be from 1.5 to 2.0, preferably from 1.7 to 1.9. If Mb/(Tb × Tc) is 0.5 or more, the thermal shrinkage rate of the separator in both MD and TD may increase, especially resulting in a steep increase in TD thermal shrinkage, thereby reducing heat resistance.

The ratio (Mb/Tc) of the MD stretch ratio (Mb) of the base sheet in step (b) to the TD stretch ratio (Tc) of the porous film in step (c) may be from 3.0 to 5.0, preferably from 3.5 to 4.8, more preferably from 3.5 to 4.5, but is not limited thereto.

The porous film obtained in step (c) may have a thickness of 10 μm or less, preferably from 1 to 8 μm, more preferably from 2 to 7 μm. If the thickness of the porous film exceeds 10 μm, it may be difficult to thin the separator and to miniaturize or integrate the battery including it. If the thickness is less than 1 μm, the mechanical strength of the separator, particularly the puncture strength, may deteriorate. The puncture strength of the porous film obtained in step (c) may be 500 gf or more, preferably from 500 to 1,000 gf, more preferably from 510 to 800 gf.

The separator obtained in step (c) may be used directly in battery assembly, or, if necessary, a functional layer may be formed on its surface before application.

After step (c), the method may further include: (d) forming a functional layer by applying and drying a coating solution comprising a binder and a solvent on at least one surface of the porous film. Specifically, in step (d), the coating solution comprising a binder and a solvent may be applied to at least one surface of the porous film and dried to remove the solvent and other liquid residues included in the coating solution, thereby forming the functional layer. The functional layer may be formed on one surface of the porous film, and if necessary, on both surfaces. When the functional layers are formed on both surfaces of the porous film, the thickness, composition, and functional effects of the layers may be the same, or in some cases, at least one may differ. The binder may be selected from the group consisting of: polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene rubber, alkyl acrylate-acrylonitrile copolymer, polyethylene glycol, acrylic rubber, and combinations of two or more thereof. Preferably, the binder may be carboxymethyl cellulose and an alkyl acrylate-acrylonitrile copolymer, but is not limited thereto. For example, in the functional layer, the carboxymethyl cellulose and alkyl acrylate-acrylonitrile copolymer may be present at a weight ratio of 1 : 0.5-1.5.

The coating solution may further include at least one inorganic particle selected from the group consisting of: $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof. The inorganic particles may contribute to improving the heat resistance of the functional layer and the separator. Preferably, the inorganic particles may be $Al_2O_3$ and/or $AlO(OH)$, but are not limited thereto.

The content of the inorganic particles in the functional layer may be from 50 to 95 wt%. If the content is less than 50 wt%, the required level of heat resistance may not be achieved. If it exceeds 95 wt%, the dispersion stability of the inorganic particles may deteriorate, or coating workability and processability may decline.

The inorganic particles tend to aggregate due to electrostatic forces. Such aggregation can impair the uniformity of properties on the surface of the separator. Therefore, the coating solution may further include additives for improving the dispersibility of the inorganic particles, such as dispersants or surfactants. In particular, the coating solution may include sodium hexametaphosphate $((NaPO_3)_6)$ as a dispersant. The content of sodium hexametaphosphate in the functional layer may be from 0.01 to 1 wt%, preferably from 0.01 to 0.5 wt%. Sodium hexametaphosphate may be adsorbed to the edge portions of the inorganic particles, especially plate-like ones, and weaken the negative charge of those edge portions, thereby effectively preventing aggregation of the inorganic particles. This improves the storage stability of the coating solution for forming the functional layer and enhances the dispersion stability of the inorganic particles in the functional layer.

To obtain a water-based coating solution, the solvent may be selected from the group consisting of methanol, ethanol, propanol, butanol, methoxyethanol, ethoxyethanol, lactone, acetonitrile, N-methyl-2-pyrrolidone (NMP), formic acid, nitromethane, acetic acid, dimethyl sulfoxide, water, and combinations of two or more thereof. Preferably, the solvent may be ethanol and water, and more preferably, a mixture of ethanol and water in a weight ratio of 1:10 to 1:50. However, the solvent is not limited to the above.

The coating solution may contain from 30 to 100 parts by weight of the inorganic particles and from 1 to 20 parts by weight of the binder based on 100 parts by weight of the solvent, and preferably be water-based (aqueous or water-containing). The solids content in the coating solution may be adjusted to from 20 to 50 wt%, preferably from 30 to 40 wt%, in consideration of the balance among processability, workability, and heat resistance.

The thickness of the functional layer may be from 1 to 10 $\mu$m. If the thickness is less than 1 $\mu$m, the required level of adhesiveness and heat resistance may not be sufficiently imparted. If it exceeds 10 $\mu$m, the separator becomes thicker, which may hinder the increase in capacity, miniaturization, and integration of the battery or device.

Meanwhile, in step (d), before applying the coating solution to both surfaces of the porous film, the porous film may be subjected to plasma treatment in the presence of a mixed gas containing sulfur dioxide ($SO_2$) and oxygen ($O_2$).

Through this plasma treatment, the surface of the porous film and/or the surface of the internal pores may be hydrophilized, thereby improving the bonding strength between both surfaces of the porous film and the coating solution. As a result, the durability of the separator, particularly long-term durability and heat resistance, may be significantly enhanced.

Conventionally, a wet process involving sulfonation by immersing the surface of the porous film in sulfuric acid for a certain period of time has been mainly used for hydrophilization. However, in this case, the wet process must be carried out separately either before or after the plasma treatment, which complicates the process and generates a large amount of wastewater.

In contrast, in the present invention, since the process gas used in the plasma treatment includes a certain amount of sulfur dioxide in addition to conventional gases such as air, oxygen, and/or inert gases, sulfonic functional groups such as $-SO_3$ may be generated on the surface and inside pores of the porous film through a single dry process, without requiring a wet process such as immersion of the porous film in sulfuric acid. Accordingly, the hydrophilicity and ionic conductivity of the porous film may be maximized, the conventional complex process may be simplified, and the process may also be advantageous in terms of environmental impact.

The mixed gas used in the plasma treatment may include from 50 to 90 vol% sulfur dioxide and from 10 to 50 vol% oxygen, preferably from 60 to 80 vol% sulfur dioxide and from 20 to 40 vol% oxygen, and more preferably from 70 to 80 vol% sulfur dioxide and from 20 to 30 vol% oxygen. If the content of sulfur dioxide in the mixed gas is less than 50 vol%, the required level of hydrophilicity may not be achieved. If it exceeds 90 vol%, the process may become unstable. The plasma treatment may be carried out for from 0.5 to 90 minutes, preferably from 0.5 to 20 minutes. If the plasma treatment is performed for less than 0.5 minutes, hydrophilization and sulfonation of the porous film may be insufficient. If it exceeds 90 minutes, the degree of hydrophilization and sulfonation may converge to a certain level, and process efficiency may decrease.

The separator manufactured using the method for manufacturing a separator described above may satisfy the following conditions (i) to (iii):

(i) A thermal shrinkage rate of 5% or less in the machine direction (MD) at 150°C, preferably from 1.0 to 4.5%, more preferably from 1.9 to 4.0%, (ii) A thermal shrinkage rate of 5% or less in the transverse direction (TD) at 150°C, preferably from 1.0 to 4.8%, more preferably from 1.5 to 4.0%, (iii) A ratio of the thermal shrinkage rate in the transverse direction (TD) to that in the machine direction (MD) at 150°C of 1.1 or less, preferably from 0.5 to 1.0, more preferably from 0.6 to 0.9. The following provides detailed descriptions of the embodiments of the present invention.

Example 1

20 parts by weight of ultrahigh molecular weight polyethylene (UHMWPE) having a weight-average molecular weight of 2,000,000 and a molecular weight distribution (Mw/Mn) of 5, and 80 parts by weight of paraffin oil with a kinematic viscosity of 70 cSt at 40°C, were mixed and fed into a twin-screw extruder (inner diameter: 58 mm, L/D = 56). The screw was rotated at 40 rpm under 200°C, and the mixture was discharged through a 630 mm-wide T-die and passed over a casting roll maintained at 17°C to produce a base sheet with a thickness of 1,450 $\mu$m.

The base sheet was stretched 8.0 times in the machine direction (MD) at 105°C using a roll stretcher (MDO process), then stretched 9.5 times in the transverse direction (TD) at 125°C using a tenter stretcher (TDO1 process). The sheet was immersed in a dichloromethane extraction bath at 25°C for 1 minute to extract and remove paraffin oil, followed by drying at 50°C for 5 minutes to produce a porous film. Subsequently, the porous film was stretched 1.7 times in the transverse direction (TD) at 134°C (TDO2 process), and heat-set while relaxed at 18% to obtain a first separator with a thickness of 7 $\mu$m.

The water-dispersed ceramic slurry was prepared by mixing carboxymethyl cellulose salt (CMC), acryl-acrylonitrile copolymer latex, alumina (aluminum oxide, $Al_2O_3$), dispersant ($(NaPO_3)_6$), surfactant, water, and ethanol in the proportions shown in Table 1 below, followed by dispersion using a ball mill.

[Table 1]

| Component | Amont (g) | Solids (g) | Solids Content (%) | Dry Solids (%) |
|---|---|---|---|---|
| Water | 1,500 | 0 | 0 | 0 |
| Ethanol | 70 | 0 | 0 | 0 |
| CMC | 27 | 27 | 100 | 3.3 |
| Acryl-acrylonitrile copolymer latex | 70 | 31.5 | 45 | 3.9 |
| Alumina | 750 | 750 | 100 | 92.4 |
| $(NaPO_3)_6$ | 1.5 | 1.5 | 100 | 0.2 |
| Surfactant | 2 | 2 | 100 | 0.2 |
| Total | 2,421 | 812 | - | 100 |

The water-dispersed ceramic slurry was applied to one surface of the first separator using a 110-mesh gravure coating roller, then dried in a hot air oven at 80°C for 1 hour to produce a second separator having a functional (heat-resistant) layer with a thickness of 3 $\mu$m.

Example 2

Except that the base sheet was stretched 7.5 times in the machine direction (MD) in the MDO process, the first and second separators were manufactured in the same manner as in Example 1.

### Example 3

Except that the base sheet was stretched 7.0 times in the machine direction (MD) in the MDO process, the first and second separators were manufactured in the same manner as in Example 1.

### Example 4

Except that the base sheet was stretched 9.0 times in the transverse direction (TD) in the TDO1 process, and the porous film was stretched 1.9 times in the TD in the TDO2 process, the first and second separators were manufactured in the same manner as in Example 1.

### Example 5

Except that the base sheet was stretched 7.5 times in the machine direction (MD) in the MDO process, the first and second separators were manufactured in the same manner as in Example 4.

### Example 6

Except that the base sheet was stretched 7.0 times in the machine direction (MD) in the MDO process, the first and second separators were manufactured in the same manner as in Example 4.

### Example 7

Except that the base sheet was stretched 8.5 times in the transverse direction (TD) in the TDO1 process, and the porous film was stretched 2.0 times in the TD in the TDO2 process, the first and second separators were manufactured in the same manner as in Example 1.

### Example 8

Except that the base sheet was stretched 7.5 times in the machine direction (MD) in the MDO process, the first and second separators were manufactured in the same manner as in Example 7.

### Example 9

Except that the base sheet was stretched 7.0 times in the machine direction (MD) in the MDO process, the first and second separators were manufactured in the same manner as in Example 7.

### Comparative Example 1

Except that the base sheet was stretched 9.0 times in the machine direction (MD) in the MDO process, the first and second separators were manufactured in the same manner as in Example 4.

### Comparative Example 2

Except that the base sheet was stretched 8.5 times in the transverse direction (TD) in the TDO1 process, the first and second separators were manufactured in the same manner as in Comparative Example 1.

### Comparative Example 3

Except that the base sheet was stretched 8.0 times in the transverse direction (TD) in the TDO1 process, the first and second separators were manufactured in the same manner as in Comparative Example 1.

### Comparative Example 4

Except that the porous film was stretched 2.0 times in the transverse direction (TD) in the TDO2 process, the first and second separators were manufactured in the same manner as in Comparative Example 1.

Comparative Example 5

Except that the porous film was stretched 1.7 times in the transverse direction (TD) in the TDO2 process, the first and second separators were manufactured in the same manner as in Comparative Example 1.

Comparative Example 6

Except that the porous film was stretched 1.5 times in the transverse direction (TD) in the TDO2 process, the first and second separators were manufactured in the same manner as in Comparative Example 1.

Comparative Example 7

Except that the porous film was stretched 1.8 times in the transverse direction (TD) in the TDO2 process, the first and second separators were manufactured in the same manner as in Comparative Example 1.

Comparative Example 8

Except that the base sheet was stretched 8.5 times in the machine direction (MD) in the MDO process, the first and second separators were manufactured in the same manner as in Comparative Example 7.

Comparative Example 9

Except that the base sheet was stretched 8.3 times in the machine direction (MD) in the MDO process, the first and second separators were manufactured in the same manner as in Comparative Example 7.

Comparative Example 10

A mixture of 20 parts by weight of ultrahigh molecular weight polyethylene (UHMWPE) having a weight-average molecular weight of 2,000,000 and a molecular weight distribution (Mw/Mn) of 5, and 80 parts by weight of paraffin oil with a kinematic viscosity of 70 cSt at 40°C was fed into a twin-screw extruder (inner diameter: 58 mm, L/D = 56). Under conditions of a screw rotation speed of 40 rpm and a temperature of 200°C, the mixture was discharged through a T-die with a width of 630 mm and passed over a casting roll maintained at a temperature of 17°C to produce a base sheet having a thickness of 1,500 μm. Except for this, the first and second separators were manufactured in the same manner as in Example 1.

Comparative Example 11

A mixture of 20 parts by weight of ultrahigh molecular weight polyethylene (UHMWPE) having a weight-average molecular weight of 2,000,000 and a molecular weight distribution (Mw/Mn) of 5, and 80 parts by weight of paraffin oil with a kinematic viscosity of 70 cSt at 40°C was fed into a twin-screw extruder (inner diameter: 58 mm, L/D = 56). Under conditions of a screw rotation speed of 40 rpm and a temperature of 200°C, the mixture was discharged through a T-die with a width of 630 mm and passed over a casting roll maintained at a temperature of 17°C to produce a base sheet having a thickness of 1,700 μm. Except for this, the first and second separators were manufactured in the same manner as in Example 1.

The main control variables of the method for manufacturing a separator according to the above Examples and Comparative Examples are shown in Table 2 below. In Table 2, Mb and Tb are the stretch ratios of the base sheet in the machine direction (MD) and the transverse direction (TD), respectively, and Tc is the stretch ratio of the porous film in the transverse direction (TD).

[Table 2]

| Item | Mb | Tb | Tc | Mb/Tb | Mb/(Tb×Tc) |
|---|---|---|---|---|---|
| Example 1 | 8.0 | 9.5 | 1.7 | 0.842 | 0.495 |
| Example 2 | 7.5 | 9.5 | 1.7 | 0.789 | 0.464 |
| Example 3 | 7.0 | 9.5 | 1.7 | 0.737 | 0.433 |
| Example 4 | 8.0 | 9.0 | 1.9 | 0.889 | 0.468 |

(continued)

| Item | Mb | Tb | Tc | Mb/Tb | Mb/(Tb×Tc) |
|---|---|---|---|---|---|
| Example 5 | 7.5 | 9.0 | 1.9 | 0.833 | 0.439 |
| Example 6 | 7.0 | 9.0 | 1.9* | 0.778 | 0.409 |
| Example 7 | 8.0 | 8.5 | 2.0 | 0.941 | 0.471 |
| Example 8 | 7.5 | 8.5 | 2.0 | 0.882 | 0.441 |
| Example 9 | 7.0 | 8.5 | 2.0 | 0.824 | 0.412 |
| Comparative Example 1 | 9.0 | 9.0 | 1.9 | 1.000 | 0.526 |
| Comparative Example 2 | 9.0 | 8.5 | 1.9 | 1.059 | 0.557 |
| Comparative Example 3 | 9.0 | 8.0 | 1.9 | 1.125 | 0.592 |
| Comparative Example 4 | 9.0 | 9.0 | 2.0 | 1.000 | 0.500 |
| Comparative Example 5 | 9.0 | 9.0 | 1.7 | 1.000 | 0.588 |
| Comparative Example 6 | 9.0 | 9.0 | 1.5 | 1.000 | 0.667 |
| Comparative Example 7 | 9.0 | 9.0 | 1.8 | 1.000 | 0.556 |
| Comparative Example 8 | 8.5 | 9.0 | 1.8 | 0.944 | 0.525 |
| Comparative Example 9 | 8.3 | 9.0 | 1.8 | 0.922 | 0.512 |

Experimental Example

In this experimental example, the puncture strength of the first separator and the thermal shrinkage rate of the second separator were measured according to the following methods for each of the above Examples and Comparative Examples. Unless otherwise stated, all measurements were performed at room temperature (25°C), and the results are shown in Table 3 below.

- Puncture Strength (gf): The force required to puncture the first separator was measured using a puncture strength tester. A stick was applied to a specimen of the first separator having dimensions of 100 mm × 50 mm until it was penetrated, and the force was recorded in grams-force (gf).
- Thermal Shrinkage Rate (%): A specimen of the second separator, sized 200 mm × 200 mm, was placed between A4 sheets of paper and left in an oven at 150°C for 1 hour. After cooling to room temperature, the lengths in the machine direction (MD) and transverse direction (TD) were measured, and the thermal shrinkage rate was calculated using the following equation:

$$\text{Thermal shrinkage rate } (\%) = \{(l_3 - l_4) / l_3\} \times 100$$

Where: $l_3$ is the length of the second separator specimen before shrinkage (in either MD or TD), and $l_4$ is the length of the specimen after shrinkage (in the same direction).

[Table 3]

| Item | First Separator Puncture Strength | Second Separator MD Thermal Shrinkage (A) | Second Separator TD Thermal Shrinkage (B) | B/A |
|---|---|---|---|---|
| Example 1 | 515 | 4.1 | 4.5 | 1.098 |
| Example 2 | 512 | 6.5 | 3.2 | 0.914 |
| Example 3 | 520 | 1.9 | 1.5 | 0.789 |
| Example 4 | 505 | 4.4 | 4.8 | 1.091 |
| Example 5 | 521 | 3.8 | 3.2 | 0.842 |
| Example 6 | 503 | 2.4 | 1.7 | 0.708 |

(continued)

| Item | First Separator Puncture Strength | Second Separator MD Thermal Shrinkage (A) | Second Separator TD Thermal Shrinkage (B) | B/A |
|---|---|---|---|---|
| Example 7 | 518 | 3.9 | 4.1 | 1.051 |
| Example 8 | 532 | 3.2 | 3.1 | 0.969 |
| Example 9 | 509 | 2.6 | 1.8 | 0.692 |
| Comparative Example 1 | 502 | 15.5 | 25.0 | 1.613 |
| Comparative Example 2 | 508 | 15.5 | 21.2 | 1.368 |
| Comparative Example 3 | 511 | 16.5 | 19.3 | 1.170 |
| Comparative Example 4 | 531 | 17.2 | 41.0 | 2.384 |
| Comparative Example 5 | 508 | 16.2 | 28.2 | 1.741 |
| Comparative Example 6 | 512 | 16.9 | 18.8 | 1.112 |
| Comparative Example 7 | 822 | 17.2 | 20.2 | 1.174 |
| Comparative Example 8 | 519 | 10.2 | 9.8 | 0.961 |
| Comparative Example 9 | 513 | 8.5 | 8.1 | 0.953 |
| Comparative Example 10 | 515 | 6.5 | 13.0 | 2.000 |
| Comparative Example 11 | 532 | 15.5 | 25.0 | 1.613 |

The foregoing description of the present invention is provided for illustrative purposes only. It will be understood by those skilled in the art to which the present invention pertains that various modifications and alterations can be made without departing from the spirit or essential characteristics of the invention. Therefore, the embodiments described above are to be understood in all respects as illustrative and not restrictive. For example, components described as being implemented in a singular form may also be implemented in a distributed manner, and likewise, components described as being distributed may also be implemented in a combined form. The scope of the present invention is defined by the following claims, and all modifications or alterations derived from the meaning and scope of the claims and their equivalents are to be interpreted as being included within the scope of the present invention.

**Claims**

1. A method for manufacturing a separator, comprising:

    (a) processing a composition comprising a polyolefin and a pore-forming agent to obtain a base sheet;
    (b) stretching the base sheet in a machine direction (MD) and a transverse direction (TD), and removing the pore-forming agent to obtain a porous film; and
    (c) stretching the porous film in the transverse direction (TD) and heat-setting the same,

    wherein the method satisfies the following conditions (1) to (3):

    $$(1)\ 7 \leq Mb \leq 8,$$

    $$(2)\ 0 < Mb/Tb < 1,$$

    $$(3)\ 0 < Mb/(Tb \times Tc) < 0.5,$$

    wherein Mb and Tb are the stretch ratios of the base sheet in the machine direction (MD) and the transverse direction (TD), respectively, in step (b), and Tc is the stretch ratio of the porous film in the transverse direction (TD) in step (c).

2. The method for manufacturing a separator according to claim 1,

the weight-average molecular weight (Mw) of the polyolefin may be from 1,000,000 to 4,000,000.

3. The method for manufacturing a separator according to claim 2,
   the polyolefin may include at least one selected from the group consisting of polyethylene, polypropylene, polybutylene, polymethylpentene, ethylene-vinyl acetate, ethylene-butyl acrylate, ethylene-ethyl acrylate, and copolymers or combinations of two or more thereof.

4. The method for manufacturing a separator according to claim 1,
   the Tc may be from 1.5 to 2.0.

5. The method for manufacturing a separator according to claim 1,
   the ratio (Mb/Tc) of Mb to Tc may be from 3.0 to 5.0.

6. The method for manufacturing a separator according to claim 1,
   the pore-forming agent may be paraffin oil having a kinematic viscosity of from 50 to 100 cSt at 40°C.

7. The method for manufacturing a separator according to claim 1,
   the base sheet obtained in step (a) may have a thickness of from 1,000 to 1,500 $\mu$m, and the porous film obtained in step (c) may have a thickness of 10 $\mu$m or less and a puncture strength of 500 gf or more.

8. The method for manufacturing a separator according to claim 1,
   the method may further comprise:
   (d) forming a functional layer by coating and drying a coating solution containing a binder and a solvent on at least one surface of the porous film after step (c).

9. The method for manufacturing a separator according to claim 8,
   the binder may be selected from the group consisting of: polyvinylidene fluoride, polyvinylidene fluoride-hexafluoropropylene, polyvinylidene fluoride-trichloroethylene, polymethyl methacrylate, polyacrylonitrile, polyvinylpyrrolidone, polyvinyl acetate, ethylene-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, hydroxyethyl cellulose, cyanoethyl sucrose, pullulan, carboxymethyl cellulose, polyvinyl alcohol, polyvinyl butyral, acrylonitrile-acrylic acid copolymer, ethylene-acrylic acid copolymer, styrene-butadiene copolymer, alkyl acrylate-acrylonitrile copolymer, polyethylene glycol, acrylic rubber, and combinations of two or more thereof.

10. The method for manufacturing a separator according to claim 8,
    the solvent may be selected from the group consisting of: methanol, ethanol, propanol, butanol, methoxyethanol, ethoxyethanol, lactone, acetonitrile, N-methyl-2-pyrrolidone, formic acid, nitromethane, acetic acid, dimethyl sulfoxide, water, and combinations of two or more thereof.

11. The method for manufacturing a separator according to claim 8,
    the coating solution may further include at least one inorganic particle selected from the group consisting of: $SiO_2$, $AlO(OH)$, $Mg(OH)_2$, $Al(OH)_3$, $TiO_2$, $BaTiO_3$, $Li_2O$, $LiF$, $LiOH$, $Li_3N$, $BaO$, $Na_2O$, $Li_2CO_3$, $CaCO_3$, $LiAlO_2$, $Al_2O_3$, $SiO$, $SnO$, $SnO_2$, $PbO_2$, $ZnO$, $P_2O_5$, $CuO$, $MoO$, $V_2O_5$, $B_2O_3$, $Si_3N_4$, $CeO_2$, $Mn_3O_4$, $Sn_2P_2O_7$, $Sn_2B_2O_5$, $Sn_2BPO_6$, and combinations of two or more thereof.

12. A separator manufactured using the method for manufacturing a separator according to any one of claims 8 to 11, wherein the separator satisfies the following conditions:

    (i) A thermal shrinkage rate in the machine direction (MD) of 5% or less at 150°C,
    (ii) A thermal shrinkage rate in the transverse direction (TD) of 5% or less at 150°C, and
    (iii) A ratio of the thermal shrinkage rate in the transverse direction (TD) to that in the machine direction (MD) of 1.1 or less at 150°C.

## INTERNATIONAL SEARCH REPORT

| International application No. |
|---|
| **PCT/KR2024/002161** |

| | |
|---|---|
| **A.** | **CLASSIFICATION OF SUBJECT MATTER** |

**C08J 9/28**(2006.01)i; **C08J 9/36**(2006.01)i; **B29C 48/08**(2019.01)i; **B29C 48/00**(2019.01)i; **B29C 55/12**(2006.01)i; **C09D 7/61**(2018.01)i; **C08K 3/013**(2018.01)i; **H01M 50/446**(2021.01)i

According to International Patent Classification (IPC) or to both national classification and IPC

| | |
|---|---|
| **B.** | **FIELDS SEARCHED** |

Minimum documentation searched (classification system followed by classification symbols)

C08J 9/28(2006.01); B01D 69/12(2006.01); B01D 71/26(2006.01); B29C 48/00(2019.01); B29C 48/08(2019.01); B32B 5/18(2006.01); H01M 10/052(2010.01); H01M 50/403(2021.01); H01M 50/417(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리올레핀(polyolefin), 기공(pore), 다공막(porous membrane), 세로방향(machine direction, MD), 가로방향(transverse direction, TD), 바인더(binder), 코팅(coating)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2022-0083881 A (W-SCOPE KOREA CO., LTD. et al.) 21 June 2022 (2022-06-21) See claims 1-3, 5, 7 and 8, and paragraphs [0047], [0052], [0066], [0091] and [0142]. | 1-12 |
| Y | JP 2023-020701 A (ASAHI KASEI CORP.) 09 February 2023 (2023-02-09) See paragraphs [0077]-[0089]. | 1-12 |
| A | KR 10-2014-0071095 A (LG CHEM, LTD.) 11 June 2014 (2014-06-11) See claims 1-9. | 1-12 |
| A | KR 10-2020-0026756 A (LG CHEM, LTD.) 11 March 2020 (2020-03-11) See claims 1-11. | 1-12 |
| A | KR 10-2019-0059859 A (W-SCOPE KOREA CO., LTD.) 31 May 2019 (2019-05-31) See claims 1-17. | 1-12 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 May 2024** | **31 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/002161**

| Patent document cited in search report | | | Publication date (day/month/year) | Patent family member(s) | | | Publication date (day/month/year) |
|---|---|---|---|---|---|---|---|
| KR | 10-2022-0083881 | A | 21 June 2022 | KR | 10-2023-0006781 | A | 11 January 2023 |
| | | | | KR | 10-2480491 | B1 | 23 December 2022 |
| | | | | KR | 10-2544964 | B1 | 21 June 2023 |
| JP | 2023-020701 | A | 09 February 2023 | JP | 7386209 | B2 | 24 November 2023 |
| KR | 10-2014-0071095 | A | 11 June 2014 | KR | 10-1692034 | B1 | 03 January 2017 |
| KR | 10-2020-0026756 | A | 11 March 2020 | None | | | |
| KR | 10-2019-0059859 | A | 31 May 2019 | KR | 10-2187529 | B1 | 08 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60242035 A

**Non-patent literature cited in the description**

- *Macromolecules*, 2001, vol. 34 (19), 6812-6820